# EUROPEAN PATENT APPLICATION

(11) **EP 4 375 109 A2**
(43) Date of publication of application: **29.05.2024**
(21) Application number: 23210334.1
(22) Date of filing: 16.11.2023
(51) Int. Cl.: B60K 35/21, B60K 35/23, B60K 35/25, B60K 35/26

(54) **VEHICLE FOR AVOIDING COLLISION AND METHOD OF OPERATING THE VEHICLE**

(30) Priority: 25.11.2022 KR 20220160437
(71) Applicant: HYUNDAI MOTOR COMPANY, Seoul 06797 (KR); Kia Corporation, Seocho-gu Seoul 06797 (KR); Ajou University Industry-Academic Cooperation Foundation, Suwon-si, Gyeonggi-do 443-721 (KR)
(72) Inventor: LEE, Jong Hyuck, 18270 Hwaseong-si, Gyeonggi-do (KR); PARK, Jong Sung, 18237 Hwaseong-si, Gyeonggi-do (KR); MIN, Young bin, 47515 Busan (KR); JANG, Chan Jong, 41977 Daegu (KR); SONG, Bong Sob, 13600 Seongnam-si, Gyeonggi-do (KR); LEE, Ji Min, 18473 Hwaseong-si, Gyeonggi-do (KR); LEE, Sung Woo, 16491 Suwon-si, Gyeonggi-do (KR)
(74) Representative: Isarpatent

(57) **Abstract**

Various embodiments of the present disclosure relate to a vehicle that includes a plurality of sensors configured to obtain surrounding environment information and a processor operatively coupled to the plurality of sensors. The processor is configured to generate a plurality of images reflecting dynamic characteristics according to a type of a surrounding object based on the surrounding environment information, and determine a collision avoidance trajectory for avoiding collision with the surrounding object based on the plurality of images reflecting dynamic characteristics according to the type of the surrounding object.

## Description

### TECHNICAL FIELD

Various embodiments of the present disclosure relate to a vehicle for performing in-lane steering for collision avoidance and a method of operating the vehicle.

### BACKGROUND

An autonomous driving system or a driver assistance system refers to a system that controls a vehicle such that the vehicle itself drives without a driver's intervention, or intervenes in a driver's driving behavior to assist the driving behavior. Such an autonomous driving system or driver assistance system controls the behavior of the vehicle by detecting environment around the vehicle. For example, the autonomous driving system or driver assistance system detects an object located in a front area using a sensor device mounted in a vehicle, predicts a possibility of collision with the detected object, and determines whether it is necessary to control the behavior of the vehicle to avoid collision.

Meanwhile, various systems for avoiding a collision with a front object in a vehicle have been provided. Examples of systems for collision avoidance may include an Autonomous Emergency Brake (AEB) system, a Forward Vehicle Collision Mitigation System (FVCMS), a Pedestrian Detection and Collision Mitigation System (PDCMS), and a Collision Evasive Lateral Maneuver (CELM) system.

Most of the systems for collision avoidance as described above predict the behavior of a surrounding object, determine a possibility of collision with the surrounding object based on the predicted behavior, and control the behavior of a vehicle for collision avoidance. However, it may be difficult to flexibly cope with collision situations according to various surrounding environments when collision avoidance is performed simply based on the behavior of the surrounding object.

### SUMMARY

Accordingly, various embodiments of the present disclosure provide a vehicle and an operation method thereof, which perform collision avoidance in consideration of dynamic characteristics of surrounding objects.

Various embodiments of the present disclosure provide a vehicle that determines a collision avoidance trajectory by generating an image reflecting a surrounding environment and/or dynamic characteristics according to types of surrounding objects, and an operation method thereof.

The technical tasks that may be achieved by an embodiment in the present disclosure are not necessarily limited to the technical tasks mentioned above, and other technical tasks not mentioned may be clearly understood by those of ordinary skill in the art to which the present disclosure belongs, from the description below.

According to various embodiments of the present disclosure, a vehicle for avoiding a collision may include a plurality of sensors configured to obtain surrounding environment information, and a processor operatively connected to the plurality of sensors. In an embodiment, the processor may generate a plurality of images reflecting dynamic characteristics according to a type of a surrounding object based on the surrounding environment information, and determine a collision avoidance trajectory for avoiding collision with the surrounding object based on the plurality of images. According to an embodiment, the processor may determine a display form of the surrounding object based on the type of the surrounding object, and perform control such that the surrounding object is displayed according to the determined display form when generating the plurality of images, and the type of the surrounding object may include a vehicle, a pedestrian, a bicycle, an electric scooter, or any combination thereof, for example.

According to an embodiment, the processor may determine the display form of the surrounding object as an ellipse when the surrounding object is a pedestrian, and determine a heading angle, a length, a width, or any combination thereof, of the ellipse based on a magnitude of a current movement speed of the pedestrian and/or a current movement direction of the pedestrian.

According to an embodiment, the processor may determine a possibility of movement in a direction other than the current movement direction based on posture information of a pedestrian, and change the display form of the ellipse based on the possibility of movement in the other direction.

According to an embodiment, the processor may determine a possibility of movement in a direction other than the current movement direction based on posture information of a pedestrian, and further display an additional ellipse indicating the possibility of movement in the other direction.

According to an embodiment, the processor may obtain line information from the surrounding environment information, and perform control such that a line is displayed in a specified first color when generating the plurality of images.

According to an embodiment, the processor may calculate a risk level of collision with the surrounding object based on the surrounding environment information, determine a display brightness of the surrounding object according to the calculated risk level of collision, and perform control such that the surrounding object is displayed according to the determined display brightness when generating the plurality of images.

According to an embodiment, the processor may predict a positional change of the surrounding object based on the surrounding environment information, generate trajectories of the vehicle for avoiding a collision within a lane, and generate the plurality of images reflecting dynamic characteristics according to the type of the surrounding object, based on the positional change of the surrounding object and the generated trajectories of the vehicle.

According to an embodiment, the in-lane collision avoidance strategies may include an evasive steering to right (ESR) strategy, an evasive steering to left (ESL) strategy, a decelerating (DEC) strategy, or any combination thereof.

According to an embodiment, the processor may determine whether the surrounding object exists within a region of interest based on the surrounding environment information, and generate a plurality of images reflecting dynamic characteristics according to the type of the surrounding object when the surrounding object exists within the region of interest.

According to various embodiments of the present disclosure, a method of a vehicle for avoiding a collision may include obtaining surrounding environment information using a plurality of sensors, generating a plurality of images reflecting dynamic characteristics according to a type of a surrounding object based on the surrounding environment information, and determining a collision avoidance trajectory for avoiding collision with the surrounding object based on the plurality of images.

According to an embodiment, the generating of the plurality of images reflecting dynamic characteristics may include determining a display form of the surrounding object based on the type of the surrounding object and performing control such that the surrounding object is displayed in each of the plurality of images according to the determined display form, and the type of the surrounding object may include a vehicle, a pedestrian, a bicycle, an electric scooter, or any combination thereof, for example.

According to an embodiment, the determining of the display form of the surrounding object may include determining the display form of the surrounding object as an ellipse when the surrounding object is a pedestrian, and determining a heading angle, a length, a width, or any combination thereof, of the ellipse based on a magnitude of a current movement speed of the pedestrian and/or a current movement direction of the pedestrian.

According to an embodiment, the determining of the display form of the surrounding object may further include determining a possibility of movement in a direction other than the current movement direction based on posture information of the pedestrian, and changing the display form of the ellipse based on the possibility of movement in the other direction.

According to an embodiment, the determining of the display form of the surrounding object may further include determining a possibility of movement in a direction other than the current movement direction based on posture information of the pedestrian, and determining that an additional ellipse indicating a possibility of movement in the other direction is further displayed.

According to an embodiment, the generating of the plurality of images reflecting dynamic characteristics may include obtaining line information from the surrounding environment information, and performing control such that a line is displayed in a specified first color when generating the plurality of images.

According to an embodiment, the generating of the plurality of images reflecting dynamic characteristics may include calculating a risk level of collision with the surrounding object from the surrounding environment information, determining a display brightness of the surrounding object according to the calculated risk level of collision, and performing control such that the surrounding object is displayed in each of the plurality of images according to the determined display brightness.

According to an embodiment, the generating of the plurality of images reflecting dynamic characteristics may include predicting a positional change of the surrounding object based on the surrounding environment information, generating trajectories of the vehicle for avoiding a collision within a lane, and generating the plurality of images reflecting dynamic characteristics according to the type of the surrounding object, based on the positional change of the surrounding object and the generated trajectories of the vehicle.

According to an embodiment, the method may further include determining whether the surrounding object exists within a region of interest based on the surrounding environment information and generating a plurality of images reflecting dynamic characteristics according to the type of the surrounding object when the surrounding object exists within the region of interest.

### BRIEF DESCRIPTION OF THE DRAWINGS

FIG. 1 is a block diagram of a vehicle according to various embodiments of the disclosure.
FIG. 2 is an exemplary diagram illustrating components of a vehicle according to various embodiments of the present disclosure.
FIG. 3 is a detailed configuration diagram of a processor according to various embodiments of the present disclosure.
FIG. 4 is an exemplary diagram showing simplified bird's eye view images generated based on lane information and object information according to various embodiments of the present disclosure.
FIG. 5 is an exemplary diagram showing simplified bird's eye view images generated according to a trajectory of a vehicle according to various embodiments of the present disclosure.
FIG. 6 is an exemplary diagram showing dynamic characteristics of a vulnerable road user according to various embodiments of the present disclosure.
FIG. 7 is an exemplary diagram showing dynamic characteristics of a vulnerable road user according to various embodiments of the present disclosure.
FIG. 8 is an exemplary diagram showing error covariance based on a predicted value and a measured value for the behavior of a vulnerable road user according to various embodiments of the present disclosure.
FIG. 9 is an exemplary diagram for obtaining an error covariance according to various embodiments of the present disclosure.
FIG. 10 is an exemplary diagram for determining a collision avoidance trajectory within a lane based on simplified bird's eye view images according to various embodiments of the present disclosure.
FIG. 11 is a flowchart for determining an in-lane collision avoidance trajectory in a vehicle according to various embodiments of the present disclosure.

### DETAILED DESCRIPTION OF ILLUSTRATIVE EMBODIMENTS

Hereinafter, embodiments disclosed herein will be described in detail with reference to the accompanying drawings, and the same or similar elements may be designated with the same numeral references regardless of the numerals in the drawings and their redundant description may be omitted.

The suffixes "module" or "unit or portion" for components used in the following description may be merely provided for facilitation of preparing this specification, and thus they are not necessarily granted a specific meaning or function. In addition, "module" or "part" may be a software component or a hardware component such as a field programmable gate array (FPGA) or an application specific integrated circuit (ASIC), and the "module" or "part" may perform a certain role. However, the "part" or "module" is not meant to be limited to software or hardware. The "part" or "module" may be configured to be placed in an addressable storage medium or to restore one or more processors. Thus, for one example, the "part" or "module" may include components such as software components, object-oriented software components, class components, and task components, and may include processes, functions, attributes, procedures, subroutines, segments of a program code, drivers, firmware, microcode, circuits, data, databases, data structures, tables, arrays, and variables. Components and functions provided in the "part" or "module" may be combined with a smaller number of components and "parts" or "modules" or may be further divided into additional components and "parts" or "modules".

Methods or algorithm steps described relative to some embodiments of the present invention may be directly implemented by hardware or software modules that are executed by a processor or may be directly implemented by a combination thereof. The software module may be resident on a RAM, a flash memory, a ROM, an EPROM, an EEPROM, a resistor, a hard disk, a removable disk, a CD-ROM, or any other type of record medium known to those skilled in the art. An exemplary record medium is coupled to a processor and the processor may read information from the record medium and may record the information in a storage medium. In another way, the record medium may be integrally formed with the processor. The processor and the record medium may be resident within an application specific integrated circuit (ASIC). The ASIC may reside in a user terminal.

When it is determined that the detailed description of the related known technology may obscure the gist of embodiments disclosed herein in describing the embodiments, a detailed description thereof may be omitted. Further, the accompanying drawings are intended to facilitate understanding of the embodiments disclosed herein, and the technical spirit disclosed herein are not necessarily limited by the accompanying drawings. Therefore, the present disclosure should be construed as including all changes, equivalents, and substitutions included in the spirit and scope of the present disclosure.

The terms coming with ordinal numbers such as 'first', 'second', or the like may be used to denote various components, but the components are not necessarily limited by the terms. The terms may be used merely for the purpose to distinguish a component from the other component.

It may also be understood that when an element is referred to as being "connected" or "coupled" to another element, it may be directly connected or coupled to the other element or intervening elements may be present. In contrast, when an element is referred to as being "directly connected" or "directly coupled" to another element, there are no intervening elements present.

Prior to a detailed description of the present disclosure, terms used herein may be defined as follows.

A vehicle may be equipped with an automated driving system (ADS) and may be capable of autonomous driving. For example, the vehicle may perform steering, acceleration, deceleration, lane change, stop (or pull over), or any combination thereof, without a driver's operation based on the ADS. The ADS may include, for example, a Pedestrian Detection and Collision Mitigation System (PDCMS), a Lane Change Decision Aid System (LCDAS), a Lane Departure Warning System (LDWS), an Adaptive Cruise Control (ACC), a Lane Keeping Assistance System (LKAS), a Road Boundary Departure Prevention System (RBDPS), a Curve Speed Warning System (CSWS), a Forward Vehicle Collision Warning System (FVCWS), a Low Speed Following (LSF), a Collision Evasive Lateral Manoeuvre System (CEML), or any combination thereof.

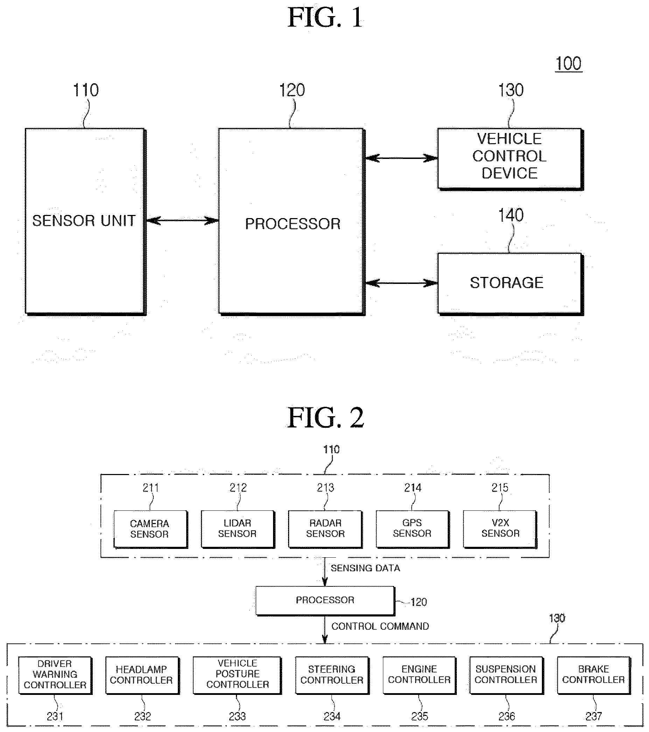

FIG. 1 is a block diagram of a vehicle according to various embodiments of the disclosure.

FIG. 1 shows a configuration of a vehicle 100 according to an embodiment, in which each component may be configured as one chip, one part, or one electronic circuit, or a combination of chips, parts, and/or electronic circuits. According to an embodiment, some of the components shown in FIG. 1 may be separated into a plurality of components and configured as different chips, different parts, or different electronic circuits, and some components may be combined into one chip, one part, or one electronic circuit. According to an embodiment, some of the components shown in FIG. 1 may be omitted or other components not shown may be added.

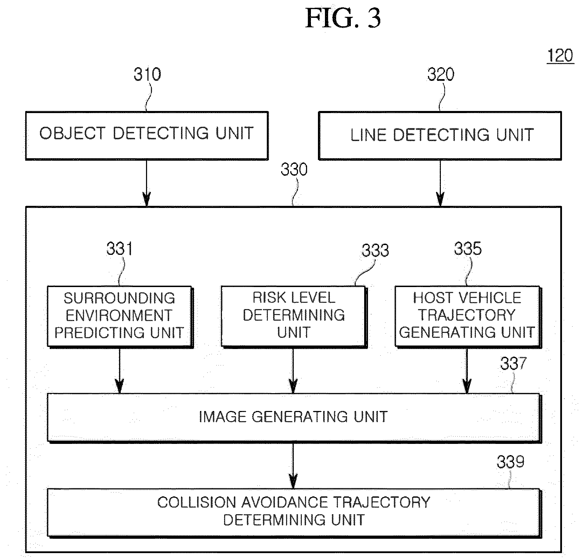

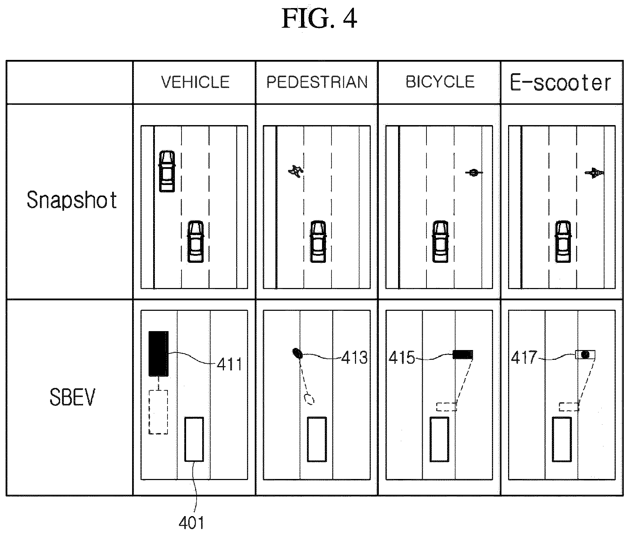

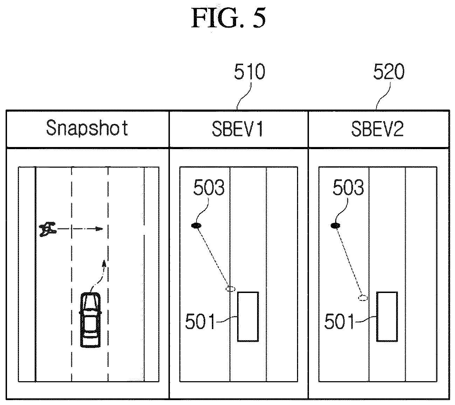

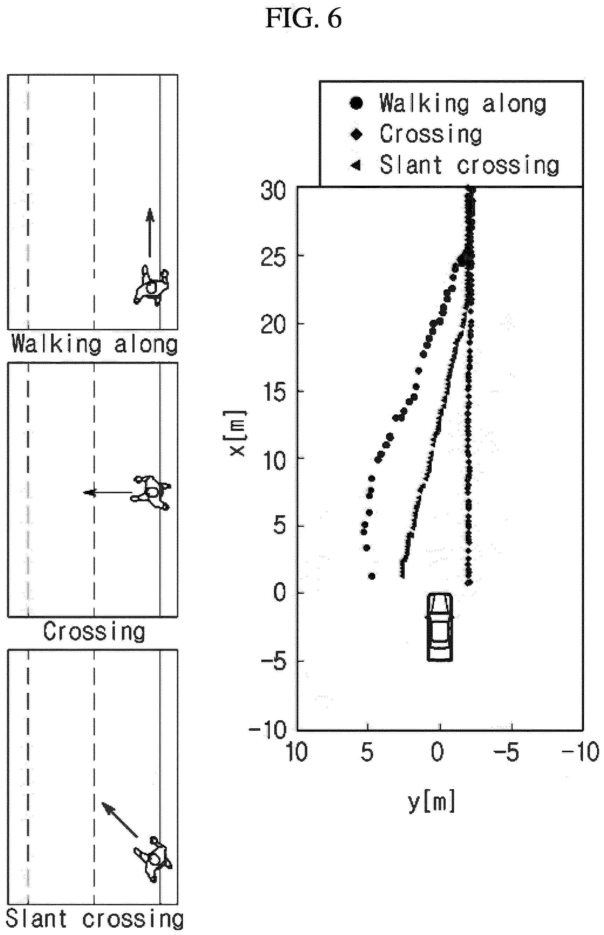

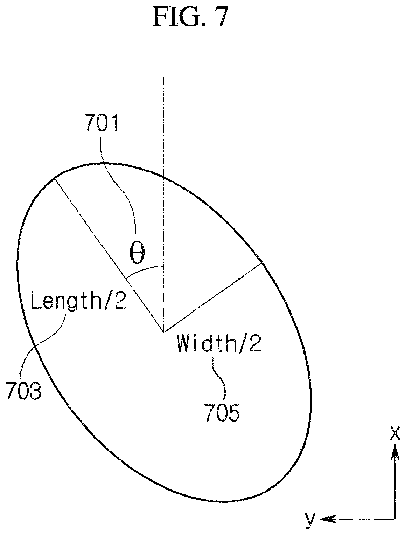

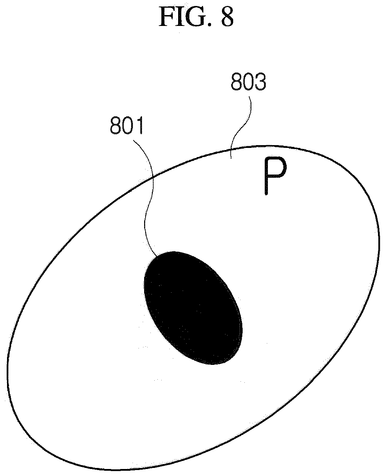

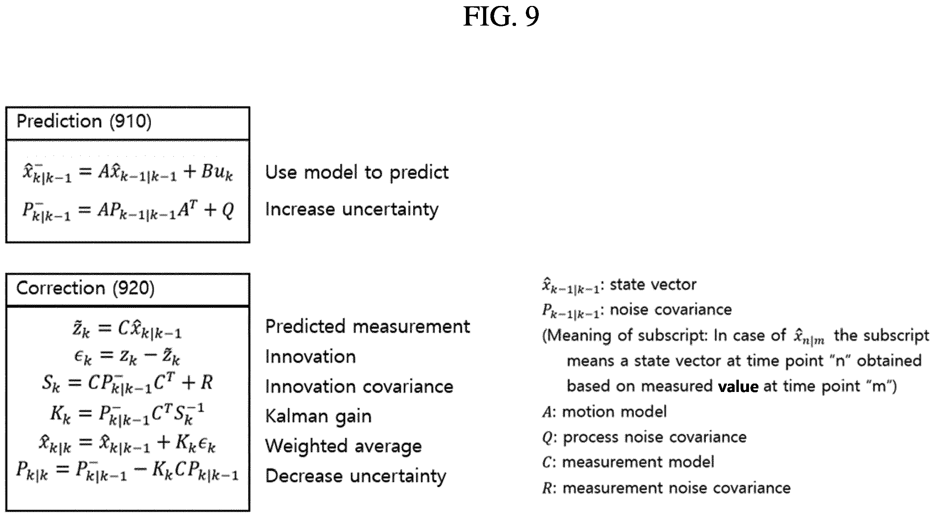

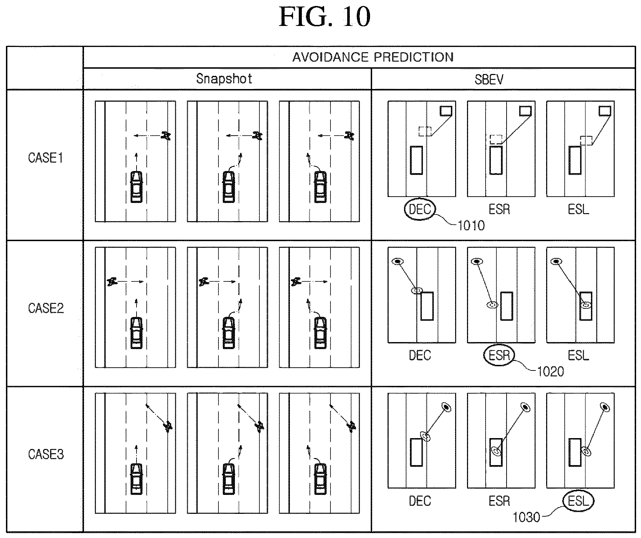

Hereinafter, at least some of the components of FIG. 1 will be described with reference to FIGS. 2 to 10. FIG. 2 is an exemplary diagram illustrating components of a vehicle according to various embodiments of the present disclosure. FIG. 3 is a detailed configuration diagram of a processor according to various embodiments of the present disclosure. FIG. 4 is an exemplary diagram showing simplified bird's eye view images generated based on lane information and object information according to various embodiments of the present disclosure. FIG. 5 is an exemplary view showing simplified bird's eye view images generated according to a trajectory of a vehicle according to various embodiments of the present disclosure. FIG. 6 is an exemplary diagram showing dynamic characteristics of a vulnerable road user according to various embodiments of the present disclosure. FIG. 7 is an exemplary diagram showing dynamic characteristics of a vulnerable road user according to various embodiments of the present disclosure. FIG. 8 is an exemplary diagram showing error covariance based on a predicted value and a measured value for the behavior of a vulnerable road user according to various embodiments of the present disclosure. FIG. 9 is an exemplary diagram for obtaining an error covariance according to various embodiments of the present disclosure. And, FIG. 10 is an exemplary diagram for determining a collision avoidance trajectory within a lane based on simplified bird's eye view images according to various embodiments of the present disclosure.

Referring to FIG. 1, in an embodiment, the vehicle 100 may include a sensor unit 110, a processor 120, a vehicle control device 130, and a storage 140.

According to various embodiments, the sensor unit 110 may detect a surrounding environment of the vehicle 100 using at least one sensor provided in the vehicle 100, and generate data related to the surrounding environment based on a result of the detection. According to an embodiment, the sensor unit 110 may obtain surrounding object information based on sensing data obtained from at least one sensor. The surrounding object information may include the type of an object, the position of the object, the angle of the object, the size of the object, the shape of the object, a distance to the object, a relative speed to the object, or any combination thereof. The surrounding object may include, for example, a surrounding vehicle, a pedestrian, a bicycle, an electric scooter, or any combination thereof.

According to an embodiment, the sensor unit 110 may measure a position of the vehicle 100 using at least one sensor. As shown in FIG. 2, the sensor unit 110 may include, for example, a camera sensor 211, a light detection and ranging (LIDAR) sensor 212, a radio detection and ranging (RADAR) sensor 213, a GPS sensor 214, a V2X sensor 215, or any combination thereof. The sensors shown in FIG. 2 are only examples for easy understanding, and the sensors of this document are not necessarily limited thereto. For example, although not shown in FIG. 2, the sensor unit 110 may include an infrared sensor.

The camera sensor 211 may be a device that senses an image of a subject photographed through a lens, processes the sensed image, and outputs processed image data. The camera sensor 211 may include an image sensor and an image processor. The camera sensor 211 may sense a front view, a side view, and a rear view of the vehicle 100. The camera sensor 211 may include a plurality of camera sensors mounted on the vehicle 100.

The LIDAR sensor 212 may measure distance, speed, and/or angle information of a surrounding object using a laser. The LIDAR sensor 212 may detect a surrounding object located in the front area, the side area, and/or the rear area of the vehicle 100 using a laser.

The RADAR sensor 213 may measure the distance, speed, or angle of a surrounding object using electromagnetic waves. The RADAR sensor 213 may detect a surrounding object located in the front area, the side area, and/or the rear area of the vehicle 100 using electromagnetic waves.

The GPS sensor 214 may measure the position, speed and/or time of the vehicle 100 through communication with satellites. For example, the GPS sensor 214 is a device that measures a delay time of a radio wave emitted from a satellite and obtains a current location based on a distance from an orbit.

The V2X sensor 215 may perform vehicle-to-vehicle communication (V2V), vehicle-to-infrastructure communication (V2I), and vehicle-to-network communication (V2N). The V2X sensor 215 may include a transceiver capable of transmitting and receiving radio frequencies. As an example of V2X communication, there may be a wireless communication method such as 4G/LTE, 5G, WiFi, Bluetooth, and the like. The V2X sensor 215 may receive information on other vehicles (e.g., position, movement speed), traffic information (e.g., traffic congestion, whether an accident has occurred ahead), and/or entertainment information (e.g., video streaming, music streaming, news).

According to various embodiments, the processor 120 may control overall operation of the vehicle 100. According to an embodiment, the processor 120 may include a central processing unit (CPU) or a micro controller unit (MCU) capable of performing arithmetic processing. For example, the processor 120 may include a central processing unit (CPU) or a micro controller unit (MCU) capable of performing arithmetic processing.

According to various embodiments, the processor 120 may obtain surrounding environment information based on the sensing data provided from the sensor unit 110, and determine a collision avoidance trajectory for avoiding a collision within a lane based on the obtained surrounding environment information. The surrounding environment information may include information on surrounding objects and/or line information.

According to various embodiments, the processor 120 may include an object detecting unit 310, a line detecting unit 320, and a collision avoidance control unit 330, as shown in FIG. 3, and the processor 120 may determine a collision avoidance trajectory for avoiding a collision within a lane based on a surrounding object and line information.

According to various embodiments, the object detecting unit 310 may detect surrounding object information based on sensing data provided from the sensor unit 110. The surrounding object information may include a type of a surrounding object, a movement speed of the surrounding object, a movement direction of the surrounding object, a size of the surrounding object, a distance to the surrounding object, or any combination thereof. The surrounding object may include, for example, a surrounding vehicle, a pedestrian, a bicycle, an electric scooter, or any combination thereof.

According to various embodiments, the line detecting unit 320 may detect line information related to a lane in which the vehicle 100 is driving from sensing data provided from the sensor unit 100. The line information may include the total number of lines on a road on which the vehicle 100 is driving, the curvature of a line in which the vehicle 100 is driving, whether there are adjacent lanes to the lane on which the vehicle 100 is driving, whether there is a shoulder within a specified range with respect to a current lane on which the vehicle 100 is driving, or any combination thereof.

According to various embodiments, the collision avoidance control unit 330 (see FIG. 3) may include a surrounding environment predicting unit 331, a risk level determining unit 333, a host vehicle trajectory generating unit 335, an image generating unit 337, and a collision avoidance trajectory determining unit 339. The collision avoidance control unit 330 may generate a plurality of images reflecting dynamic characteristics according to the type of a surrounding object, and determine a collision avoidance trajectory for avoiding a collision within the lane based on the generated plurality of images.

According to various embodiments, the surrounding environment predicting unit 331 may predict a change in the surrounding environment (e.g., a change in position of a surrounding object) based on surrounding object information and line information. The surrounding environment predicting unit 331 may predict a change in the surrounding environment in further consideration of road map information previously stored or obtained through the V2X sensor 215, and intension information (e.g., cut-off) of a surrounding vehicle, in addition to the surrounding object information and the line information.

According to various embodiments, the risk level determining unit 333 may calculate a risk level of collision between the vehicle 100 and a surrounding object based on surrounding object information provided from the object detecting unit 310. The risk level of collision may include, for example, a longitudinal collision risk index and/or a lateral collision risk index. The risk level of collision may be calculated based on a longitudinal distance between the vehicle 100 and the surrounding object, a lateral distance between the vehicle 100 and the surrounding object, a longitudinal relative speed between the vehicle 100 and the surrounding object, a lateral relative speed between the vehicle 100 and the surrounding object, a reaction time until the driver operates a brake, a stop distance considering the driver's reaction time, the system latency time of system hardware, the maximum longitudinal deceleration of the vehicle 100, or any combination thereof.

According to various embodiments, the host vehicle trajectory generating unit 335 may generate a trajectory of the vehicle 100 corresponding to each of the in-lane collision avoidance strategies. The in-lane collision avoidance strategies may include, for example, an evasive steering to right (ESR) strategy, an evasive steering to left (ESL) strategy, a decelerating (DEC) strategy, or any combination thereof. The ESR strategy may refer to a strategy for avoiding a collision by steering to the right within a lane, and the ESL strategy may refer to a strategy for avoiding a collision by steering to the left within a lane. Also, the DEC may refer to a strategy for avoiding a collision by using only longitudinal deceleration without lateral operation. The host vehicle trajectory generating unit 335 may generate, for example, a trajectory of the vehicle 100 when performing the ESR strategy, a trajectory of the vehicle 100 when performing the ESL strategy, a trajectory of the vehicle 100 when performing the DEC strategy, a trajectory of the vehicle 100 when performing no in-lane collision avoidance strategy, or any combination thereof. As another example, the host vehicle trajectory generating unit 335 may generate at least one of a lateral position of the vehicle 100 when performing the ESR strategy, a lateral position of the vehicle 100 when performing the ESL strategy, a lateral position of the vehicle 100 when performing the DEC strategy, or a lateral position of the vehicle 100 when performing no in-lane collision avoidance strategy.

According to various embodiments, the image generating unit 337 may generate a plurality of images to be used to determine a collision avoidance trajectory using pieces of information obtained from the object detecting unit 310, the line detecting unit 320, the surrounding environment predicting unit 331, the risk level determining unit 333, the host vehicle trajectory generating unit 335, or any combination thereof. The generated plurality of images may be a bird's eye view image and/or a simplified bird's eye view image.

According to one embodiment, the image generating unit 337 may generate a simplified bird's eye view image showing the position of the vehicle 100, the position of the surrounding object, the type of the surrounding object, the risk of collision between the vehicle 100 and the surrounding object, an expected change in position of the surrounding object, lines, or any combination thereof.

According to an embodiment, when generating a simplified bird's eye view image of a surrounding object, the image generating unit 337 may perform control such that lines are displayed in a specified first color (e.g., green).

According to an embodiment, when generating a simplified bird's eye view image of a surrounding object, the image generating unit 337 may indicate a risk of collision between the vehicle 100 and the surrounding object by controlling a brightness of the surrounding object. For example, the image generating unit 337 may process a simplified bird's eye view image such that an object with a low risk of collision is displayed in red with relatively low brightness and an object with a high risk of collision is displayed in red with relatively high brightness.

According to an embodiment, when generating a simplified bird's eye view image for a surrounding object, the image generating unit 337 may determine a display form of the surrounding object according to a type of the surrounding object. For example, as shown in the snapshot of FIG. 4, a method of determining a display form of a surrounding object will be described under the assumption that another vehicle, a pedestrian, a bicycle, and/or an E-scooter are detected as surrounding objects in front of the vehicle. As shown in FIG. 4, the image generating unit 337 may determine the display form of a vehicle (another vehicle) as a rectangle 411 with a specified first size and determine the display form of a pedestrian as an oval 413. In addition, the image generating unit 337 may determine the display form of a bicycle as a rectangle 415 having a specified second size, and determine the display form of an E-scooter as a combination of a circle and a rectangle 417. Here, the second size may be smaller than the first size. Also, the first size may be the same as the displayed size of the vehicle 401. After determining the display form of each surrounding object, the image generating unit 337 may perform control such that the surrounding object is displayed in the determined display form on the simplified bird's eye view image. Here, determining the display forms of the surrounding objects differently according to the types of the surrounding objects may be to enable the collision avoidance trajectory determining unit 339 to easily figure out of which type is the surrounding object, merely by analyzing information on the display form of the surrounding object in the simplified bird's eye view image, for example.

According to an embodiment, the image generating unit 337 may generate simplified bird's eye view images reflecting a change in the surrounding environment and trajectories of the vehicle 100 for collision avoidance within a lane. For each of the in-lane collision avoidance strategies, the image generating unit 337 may generate a simplified bird's eye view image representing a difference between a predicted positional change of a surrounding object and a trajectory of the vehicle 100 according to the corresponding in-lane collision avoidance strategy. For example, as shown in FIG. 5, when a pedestrian 503 is predicted to cross a road from left to right, the image generating unit 337 may generate a first simplified bird's eye view image (SBEV1) 510 for a case where the vehicle 501 does not perform an avoidance strategy and a second simplified bird's eye view image (SBEV2) 520 for a case where the vehicle performs the ESR strategy. Here, a relative positional change of the pedestrian between the case where the vehicle 501 does not perform the avoidance strategy and the case where the vehicle performs the ESR strategy may be indicated by a dotted line. The first simplified bird's eye view image (SBEV1) 510 of FIG. 5 may indicate that a collision between the pedestrian 503 and the vehicle 501 is predicted when the vehicle 501 does not perform the avoidance strategy, and the second simplified bird's eye view image (SBEV2) 520 may indicate that collision avoidance between the pedestrian 503 and the vehicle 501 is possible when the vehicle 501 performs the ESR avoidance strategy.

According to an embodiment, when the surrounding object is a pedestrian, the image generating unit 337 may perform control such that dynamic characteristics of the pedestrian are reflected in the simplified bird's eye view image. For example, as shown in FIG. 6, a pedestrian has dynamic characteristics in that the pedestrian is able to change direction freely and a time required for direction change is very short compared to other objects. Accordingly, the image generating unit 337 may express the size and direction values of the pedestrian's movement speed with the magnitude and direction of an ellipse, as shown in FIG. 7. For example, a heading angle (θ) 701 of the ellipse may represent a current movement direction of the pedestrian, and the length (or length/2) 703 of the ellipse may represent the movement speed of the pedestrian in the current movement direction. For example, as the length of the ellipse is longer, the magnitude of the movement speed in the current movement direction is larger, and as the length of the ellipse is shorter, the magnitude of the movement speed in the current movement direction is smaller. Also, the width of the ellipse (or width/2) 705 may represent a possibility of movement in a movement direction other than the current movement direction. For example, as the larger the width of the ellipse, the higher the possibility of movement in a movement direction other than the current movement direction, and the smaller the width of the ellipse, the lower the possibility of movement in a movement direction other than the current movement direction.

According to an embodiment, when the image generating unit 337 fails to obtain information on the magnitude and direction of the pedestrian's movement speed from the sensor unit 110 and/or the object detecting unit 310, the image generating unit 337 may obtain the movement speed and direction values of the pedestrian which are specified in advance or obtain information on the magnitude and direction of the movement speed may be based on a known tracking algorithm, for example.

According to an embodiment, the image generating unit 337 may additionally display a larger ellipse in consideration of the uncertainty of the pedestrian's movement. For example, as shown in FIG. 8, the image generating unit 337 may display a first ellipse 801 based on the pedestrian's movement speed and direction, and display a second ellipse 803 based on an error covariance (P) representing a difference between a measured value and a predicted value for the relative position and/or speed of the pedestrian.

The error covariance may be obtained through a recursive Bayesian estimation algorithm including, for example, a prediction operation 910 and a correction operation 920 as shown in FIG. 9. For example, in the prediction operation 910, the image generating unit 337 may predict a state vector (*x̂*_{*k*|*k*-1}) and a covariance matrix (*P*_{*k*|*k*-1}) at a current time point (k) based on the state vector (*x̂*_{*k*-1|*k*-1}) and the covariance matrix (*P*_{*k*-1|*k*-1}) at a previous time point (k-1) by using a motion model. In addition, the image generating unit 337 may correct the state vector and the covariance matrix obtained through the prediction operation 910 by using a measurement value measured by the sensor in the correction operation 920. Because the error covariance calculation using the recursive Bayesian estimation algorithm is known to those skilled in the art, a detailed description thereof is omitted in the disclosure.

As another example, the image generating unit 337 may display the first ellipse 801 based on the pedestrian's movement speed and direction, and display the second ellipse 803 based on the result of analyzing and/or estimating the pedestrian's posture. In this case, the second ellipse may represent a possibility of movement in a movement direction other than the current movement direction of the pedestrian.

According to various embodiments, the collision avoidance trajectory determining unit 339 may obtain a plurality of simplified bird's eye view images generated by the image generating unit 337, and determine a collision avoidance trajectory for avoiding a collision within a lane based on the plurality of simplified bird's eye view images. Each of the plurality of simplified bird's eye view images may include trajectories of the vehicle respectively corresponding to the in-lane collision avoidance strategies.

According to one embodiment, the collision avoidance trajectory determining unit 339 may select a simplified bird's eye view image having the smallest risk of collision among the plurality of simplified bird's eye view images through a pre-trained strategy determination model, and determine a trajectory of the vehicle included in the selected simplified bird's eye view image as a collision avoidance trajectory. Additionally, the collision avoidance trajectory determining unit 339 may determine an in-lane collision avoidance strategy corresponding to the selected simplified bird's eye view image as a collision avoidance strategy for the vehicle.

According to an embodiment, the collision avoidance trajectory determining unit 339 may analyze the display form of a surrounding object representing the dynamic characteristics of the surrounding object, a positional change of the surrounding object, and/or a distance relationship between the vehicle and the surrounding object from each of the plurality of simplified bird's eye view images, and select one simplified bird's eye view image based on a result of the analysis. The collision avoidance trajectory determining unit 339 may select the trajectory of the vehicle included in the selected simplified bird's eye view image as a collision avoidance trajectory for avoiding a collision within a lane.

As a specific example, as shown in FIG. 10, the collision avoidance trajectory determining unit 339 may analyze the simplified bird's eye view images obtained for the collision avoidance strategies within the lane in various situations and select one simplified bird's eye view image having the smallest risk of collision to determine a collision avoidance trajectory and/or an in-lane collision avoidance strategy.

In FIG. 10, CASE1 represents simplified bird's eye view images obtained in a situation in which a bicycle positioned on the right front side of the vehicle is expected to cross a road. The collision avoidance trajectory determining unit 339 may select a DEC image 1010 having the largest relative distance between the vehicle and the bicycle by analyzing simplified bird's eye view images for each of the DEC, ESR, and ESL of CASE 1. The collision avoidance trajectory determining unit 339 may determine the trajectory of the vehicle included in the selected DEC image 1010 as a collision avoidance trajectory, and determine a DEC strategy corresponding to the selected DEC image 1010 as an in-lane collision avoidance strategy.

CASE2 represents simplified bird's eye view images obtained in a situation where a pedestrian located on the left front side of the vehicle is expected to cross a road. The collision avoidance trajectory determining unit 339 may select an ESR image 1020 having the largest relative distance between the vehicle and the pedestrian by analyzing simplified bird's eye view images for each of the DEC, ESR, and ESL of CASE 2. The collision avoidance trajectory determining unit 339 may determine the trajectory of the vehicle included in the selected ESR image 1020 as a collision avoidance trajectory, and determine an ESR strategy corresponding to the selected ESR image 1020 as an in-lane collision avoidance strategy.

CASE3 represents simplified bird's eye view images obtained in a situation where a pedestrian located on the right front side of the vehicle is expected to slantingly cross a road. The collision avoidance trajectory determining unit 339 may select an ESL image 1030 having the largest relative distance between the vehicle and the pedestrian by analyzing simplified bird's eye view images for each of the DEC, ESR, and ESL of CASE 3. The collision avoidance trajectory determining unit 339 may determine the trajectory of the vehicle included in the selected ESL image 1030 as a collision avoidance trajectory, and determine an ESL strategy corresponding to the selected ESL image 1030 as an in-lane collision avoidance strategy.

According to various embodiments, when the collision avoidance trajectory and/or the in-lane collision avoidance strategy are determined, the processor 120 may control the behavior of the vehicle according to the determined collision avoidance trajectory and/or in-lane collision avoidance strategy in association with the vehicle control device 130. For example, when the in-lane collision avoidance strategy is the evasive steering to right (ESR) strategy, the processor 120 may provide the vehicle control device 130 with an ESR execution command.

As shown in FIG. 2, the vehicle control device 130 may include a driver warning controller 231, a head lamp controller 232, a vehicle posture controller 233, a steering controller 234, an engine controller 235, a suspension controller 236, a brake controller 237, and the like, for example.

The driver warning controller 231 may generate an audio, video, or haptic warning signal to warn the driver of a specific dangerous situation. For example, to output a warning sound, the driver warning controller 233 may output a warning sound using a vehicle sound system. Alternatively, to display a warning message, the driver warning controller 233 may output the warning message through an HUD display or a side mirror display. Alternatively, to generate a warning vibration, the driver warning controller 231 may operate a vibration motor mounted on the steering wheel.

The headlamp controller 232 may be located in the front of the vehicle to control headlamps that secure the driver's view of the front of the vehicle at night. For example, the headlamp controller 232 may perform high beam control, low beam control, left and right auxiliary lamp control, adaptive headlamp control, and the like.

The vehicle attitude controller 233 may be referred to as VDC (vehicle dynamic control) or ESC (electrical stability control), and may perform control for correcting the behavior of the vehicle by intervention of electronic equipment when the behavior of the vehicle becomes rapidly unstable due to the driver's urgent steering wheel operation or the condition of the road surface. For example, when sensors such as a wheel speed sensor, a steering angle sensor, a yaw rate sensor, and a cylinder pressure sensor detect a steering wheel operation and the steering angle of the steering wheel does not match the traveling direction of the wheels, the vehicle attitude controller 233 may perform control to distribute the braking force of each wheel by using, for example, an anti-lock brake function (ABS).

The steering controller 234 may perform control on the motor driving power steering (MPDS) system that drives the steering wheel. For example, when collision of the vehicle is predicted, the steering controller 234 may control steering of the vehicle in a direction capable of avoiding a collision and/or minimizing damage. The steering controller 234 may receive a command requesting a vehicle to drive according to the collision avoidance trajectory determined for in-lane collision avoidance from the processor 120, and perform lateral control for the vehicle within the lane according to the received command. The steering controller 234 may receive a command requesting execution of the in-lane collision avoidance strategy from the processor 120, and perform lateral control for the vehicle within the lane according to the received command. For example, when receiving an ESR execution command from the processor 120, the steering controller 234 may control the vehicle to steer to the right within a lane and when receiving an ESL execution command from the processor 120, control the vehicle to steer to the left within the lane.

When the processor 120 receives data from an oxygen sensor, an air volume sensor, or a manifold absolute pressure sensor, the engine controller 235 may control components such as an injector, a throttle, and a spark plug according to a control command from the processor 120.

The suspension controller 233 may be a device that performs motor-based active suspension control. Specifically, for example, the suspension controller 236 may variably control the damping force of a shock absorber to provide a soft ride during normal driving and a hard ride during high-speed driving and a change in attitude to secure ride comfort and driving stability. In addition, the suspension controller 236 may also perform height control, attitude control, and the like, in addition to damping force control.

The brake controller 237 may control whether to operate the brake or not and controls the leg power of the brake. For example, when a frontal collision is predicted, the brake controller 237 may perform control to automatically operate an emergency braking according to the control command of the processor 120 regardless of whether the driver has operated the brake. Also, the brake controller 237 may also control lateral movement of the vehicle by generating a lateral brake control. For example, when a braking force is generated only on the left wheel by the brake controller 237, the vehicle moves in the left direction, and when a braking force is generated only on the right wheel, the vehicle moves in the right direction.

According to various embodiments, the storage 140 (see FIG. 1) may store various programs and data for operation of the vehicle and/or the processor 120. According to an embodiment, the storage 140 may store various programs and data required to determine a collision avoidance trajectory and/or an in-lane collision avoidance strategy. The storage 140 may temporarily store data (e.g., a simplified bird's eye view image) obtained or generated while determining a collision avoidance trajectory and/or an in-lane collision avoidance strategy.

In the above description, when a simplified bird's eye view image is generated, a surrounding vehicle may be expressed by a rectangle with a specified first size, a pedestrian may be expressed by an oval, a bicycle may be expressed by a rectangle with a specified second size, and an electric scooter may be expressed by a circle in a rectangle (these are examples for better understanding). However, embodiments of the disclosure are not necessarily limited thereto. For example, the display form of a surrounding object may be changed by a designer. For example, a pedestrian may be displayed in a diamond shape, and an electric scooter may be displayed in a triangle shape.

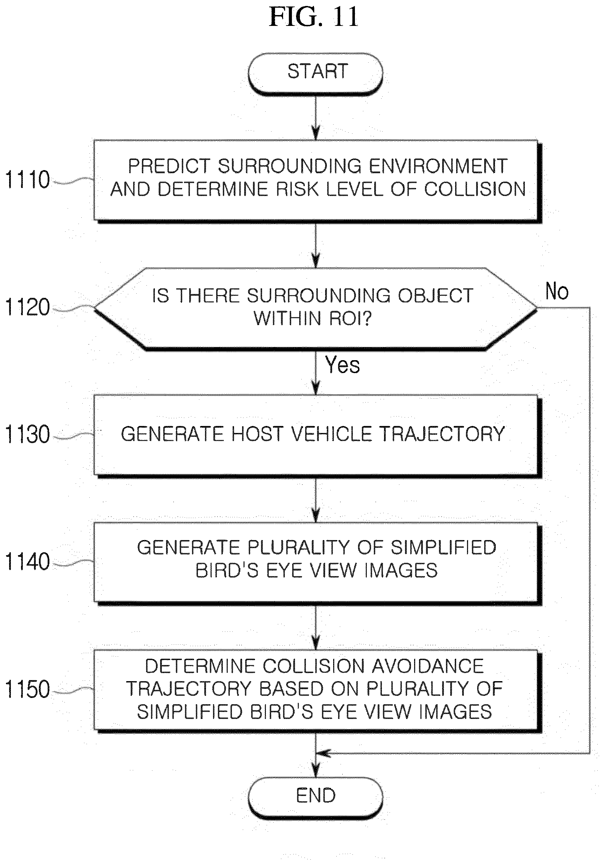

FIG. 11 is a flowchart for determining an in-lane collision avoidance trajectory in a vehicle according to various embodiments of the present disclosure. In the following embodiments, operations may be performed sequentially, but not necessarily sequentially. For example, the order of operations may be changed, or at least two operations may be performed in parallel. In addition, operations to be described below may be performed by the processor 120 and/or at least one other component (e.g., the sensor unit 110) included in the vehicle 100 or may be implemented as instructions executable by the processor 120 and/or at least one other component (e.g., the sensor unit 110).

Referring to FIG. 11, in operation 1110, the vehicle 100 may predict a surrounding environment and determine a risk of collision. According to an embodiment, the vehicle 100 may obtain surrounding object information and line information based on sensing data obtained through the sensor unit 110, and predict a change in surrounding environment based on the obtained surrounding object and line information. For example, the vehicle 100 may predict position information of a surrounding object at a next time point based on surrounding object information and line information at a current time point. According to an embodiment, the vehicle 100 may calculate a risk of collision between the vehicle and the surrounding object based on surrounding object information. The risk level of collision may be calculated based on a longitudinal distance between the vehicle and the surrounding object, a lateral distance between the vehicle and the surrounding object, a longitudinal relative speed between the vehicle and the surrounding object, a lateral relative speed between the vehicle and the surrounding object, a reaction time until the driver operates a brake, a stop distance considering the driver's reaction time, the system latency time of system hardware, the maximum longitudinal deceleration of the vehicle, or any combination thereof.

In operation 1120, the vehicle 100 may determine whether a surrounding object is located within a region of interest (ROI). For example, the vehicle 100 may determine whether the surrounding object detected through the sensor unit 110 is located within a preset region of interest of the vehicle. Whether the vehicle 100 is located within the region of interest may be determined based on sensing data obtained through the sensor unit 110.

When the surrounding object is not located within the region of interest, the vehicle 100 may end the operation process of FIG. 11.

When a surrounding object is located within the region of interest, the vehicle 100 may generate a trajectory of the vehicle in operation 1130. For example, the vehicle 100 may generate a trajectory of the vehicle, corresponding to each of the in-lane collision avoidance strategies. The trajectory of the vehicle for each of the in-lane collision avoidance strategies may include, for example, a collision avoidance trajectory corresponding to an ESR strategy, a collision avoidance trajectory corresponding to an ESL strategy, a collision avoidance trajectory corresponding to a DEC strategy, or any combination thereof.

In operation 1140, the vehicle 100 may generate a plurality of simplified bird's eye view images. For example, the vehicle 100 may generate a plurality of simplified bird's eye view images reflecting dynamic characteristics according to types of surrounding objects located in the ROI, based on the trajectories of the vehicle generated in operation 1130. The plurality of simplified bird's eye view images may include, for example, a first simplified bird's eye view image for the DEC strategy, a second simplified bird's eye view image for the ESR strategy, and/or a third simplified bird's eye view image for the ESL strategy. According to an embodiment, each of the plurality of simplified bird's eye view images may include a type of a surrounding object located within the region of interest, a positional change of the surrounding object, dynamic characteristic information according to the type of the surrounding object, line information, a risk of collision, or any combination thereof. The dynamics characteristic information according to the type of surrounding object may be represented using the display form of the object. Each of the plurality of simplified bird's eye view images may be generated in the same manner as described in the image generating unit 337 of FIG. 1.

In operation 1150, the vehicle 100 may determine a collision avoidance trajectory for in-lane collision avoidance based on the multiple bird's eye view images. For example, the vehicle 100 may analyze the plurality of simplified bird's eye view images obtained in operation 1140, select a simplified bird's eye view image with the smallest risk of collision, and determine the trajectory of the vehicle included in the selected simplified bird's eye view image as a collision avoidance trajectory. In addition, the vehicle 100 may determine an in-lane collision avoidance strategy corresponding to the selected simplified bird's eye view image as a collision avoidance strategy for the vehicle. As described in the collision avoidance trajectory determining unit 339, the vehicle 100 may determine the trajectory of the vehicle having the smallest risk of collision based on the position of a surrounding object indicated by the dotted line (i.e., where the surrounding object is expected to move at the next time point), the position of the vehicle, and/or the distance between the vehicle and the surrounding object in the simplified bird's eye view images corresponding to the plurality of in-lane avoidance strategies.

After determining the collision avoidance trajectory for in-lane collision avoidance, the vehicle 100 may control at least one component included in the vehicle to make a behavior according to the determined collision avoidance trajectory.

According to various embodiments of the present disclosure, a vehicle may generate an image reflecting surrounding environments and/or dynamic characteristics according to types of surrounding objects and determine a collision avoidance trajectory for avoiding a collision within a lane, thus flexibly coping with collision situations according to various surrounding environments, and in particular, minimizing a risk of collision with a vulnerable road user such as pedestrians, bicycles, and electric scooters.

## Claims

1. A vehicle comprising:
a plurality of sensors configured to obtain surrounding environment information; and
a processor operatively coupled to the plurality of sensors, the processor being configured to: generate a plurality of images reflecting dynamic characteristics according to a type of a surrounding object based on the surrounding environment information, and
determine a collision avoidance trajectory for avoiding collision with the surrounding object based on the plurality of images reflecting dynamic characteristics according to the type of the surrounding object.

2. The vehicle of claim 1, wherein the processor is configured to:
determine a display form of the surrounding object based on the type of the surrounding object; and
perform control such that the surrounding object is displayed according to the determined display form for the generating the plurality of images,
wherein the type of the surrounding object includes one of or any combination of a vehicle, a pedestrian, a bicycle, and an electric scooter.

3. The vehicle of claim 2, wherein the processor is configured to:
determine the display form of the surrounding object as an ellipse in response to the surrounding object being the pedestrian, and
determine one of or any combination of a heading angle, a length, and a width, of the ellipse based on one of or both of a magnitude of a current movement speed of the pedestrian and a current movement direction of the pedestrian.

4. The vehicle of claim 3, wherein the processor is configured to:
determine a possibility of movement in a direction other than the current movement direction based on posture information of the pedestrian; and
change the display form of the ellipse based on the possibility of movement in the other direction or further display an additional ellipse indicating the possibility of movement in the other direction.

5. The vehicle of claim 1, wherein the processor is configured to:
obtain line information from the surrounding environment information; and
perform control such that a line is displayed in a specified first color for the generating the plurality of images.

6. The vehicle of claim 1, wherein the processor is configured to:
calculate a risk level of collision with the surrounding object based on the surrounding environment information;
determine a display brightness of the surrounding object according to the calculated risk level of collision; and
perform control such that the surrounding object is displayed according to the determined display brightness for the generating the plurality of images.

7. The vehicle of claim 1, wherein the processor is configured to:
predict a positional change of the surrounding object based on the surrounding environment information;
generate trajectories of the vehicle for avoiding a collision; and
generate the plurality of images reflecting dynamic characteristics according to the type of the surrounding object, based on the positional change of the surrounding object and the generated trajectories of the vehicle for avoiding a collision.

8. The vehicle of claim 1, wherein the processor is configured to:
determine whether the surrounding object exists within a region of interest based on the surrounding environment information; and
generate the plurality of images reflecting dynamic characteristics according to the type of the surrounding object in response to the surrounding object being within the region of interest.

9. A method of a vehicle for avoiding a collision, comprising:
obtaining surrounding environment information using a plurality of sensors;
generating a plurality of images reflecting dynamic characteristics according to a type of a surrounding object based on the surrounding environment information; and
determining a collision avoidance trajectory for avoiding collision with the surrounding object based on the plurality of images reflecting dynamic characteristics according to the type of the surrounding object.

10. The method of claim 9, wherein the generating of the plurality of images reflecting dynamic characteristics comprises:
determining a display form of the surrounding object based on the type of the surrounding object; and
performing control such that the surrounding object is displayed in each of the plurality of images according to the determined display form,
wherein the type of the surrounding object includes one of or any combination of a vehicle, a pedestrian, a bicycle, and an electric scooter.

11. The method of claim 10, wherein the determining of the display form of the surrounding object comprises:
determining the display form of the surrounding object as an ellipse in response to the surrounding object being the pedestrian; and
determining one of or any combination of a heading angle, a length, and a width, of the ellipse, based on one of or both of a magnitude of a current movement speed of the pedestrian and a current movement direction of the pedestrian.

12. The method of claim 11, wherein the determining of the display form of the surrounding object further comprises:
determining a possibility of movement in a direction other than the current movement direction based on posture information of the pedestrian; and
changing the display form of the ellipse based on the possibility of movement in the other direction or displaying an additional ellipse indicating a possibility of movement of the pedestrian in the other direction.

13. The method of claim 9, wherein the generating of the plurality of images reflecting dynamic characteristics comprises:
obtaining line information from the surrounding environment information; and
performing control such that a line is displayed in a specified first color for the generating the plurality of images.

14. The method of claim 9, wherein the generating of the plurality of images reflecting dynamic characteristics comprises:
calculating a risk level of collision with the surrounding object from the surrounding environment information;
determining a display brightness of the surrounding object according to the calculated risk level of collision; and
performing control such that the surrounding object is displayed in each of the plurality of images according to the determined display brightness.

15. The method of claim 9, further comprising:
determining whether the surrounding object exists within a region of interest based on the surrounding environment information; and
generating a plurality of images reflecting dynamic characteristics according to the type of the surrounding object in response to the surrounding object being within the region of interest.
